# EUROPÄISCHE PATENTSCHRIFT

(11) **EP 1 911 782 B1**
(45) Veröffentlichungstag und Bekanntmachung des Hinweises auf die Patenterteilung: **01.07.2009**
(21) Anmeldenummer: 07019584.7
(22) Anmeldetag: 06.10.2007
(51) Int. Cl.: C08G 18/42

(54) **Polyesterpolyole, Verfahren zu ihrer Herstellung und ihre Verwendung**
Polyester polyols, method for their manufacture and their application
Polyesterpolyoles, leur procédé de fabrication et leur utilisation

(30) Priorität: 12.10.2006 DE 102006048288
(43) Veröffentlichungstag der Anmeldung: 16.04.2008
(73) Patentinhaber: Bayer MaterialScience AG, 51368 Leverkusen (DE)
(72) Erfinder: Nefzger, Hartmut, Dr., 50259 Pulheim (DE); Klein, Gerhard, Dr., 40789 Monheim (DE); Schmidt, Manfred, Dr., 41540 Dormagen (DE); Krause, Jens, Dr., 51063 Köln (DE); Barnes, James-Michael, 53547 Breitscheid (DE); Bauer, Erika, 41363 Jüchen (DE)

(56) Entgegenhaltungen:
- EP-A- 1 382 622
- DE-A1- 1 946 873

## Beschreibung

Die vorliegende Erfindung betrifft Polyesterpolyole, mit niedrigen Viskositätswerten, ein Verfahren zu ihrer Herstellung und ihre Verwendung.

Die Verwendung von ε-Caprolacton als Aufbaukomponente für Polyesterpolyole, welche ihrerseits wiederum z.B. bei der Herstellung von Polyurethanen zum Einsatz kommen können, ist lange bekannt (W. Meckel, W. Goyert u. W. Wieder in Thermoplastic Elastomers, A Comprehensive Review, N.R. Legge, G. Holden und H.E. Schroeder, Hanser Publishers München 1987, S. 17.).

Die Synthese von Poly-ε-caprolactonen aus monomerem ε-Caprolactonen ist ebenfalls bekannt. Nach der Lehre von US-A 2,933,477 erfolgt die Herstellung, indem bifunktionelle Startermoleküle mit Lactonen zur Reaktion gebracht werden. Hierbei wird die Molmasse des erhaltenen Poly-ε-caprolactons im Wesentlichen durch das molare Einsatzverhältnis von Starter- und monomeren ε-Caprolactonmolekülen bestimmt. Gemäß US-A 2,933,477 sind Startermoleküle solche, die der Gruppe R'(ZH)₂ entstammen, wobei Z im Wesentlichen für -0-, -NH-, -NR"- steht und R' ein Kohlenwasserstoffrest aus der Gruppe Alkylen, wie Arylen, Aralkylen und Cycloalkylen darstellt. Beispiele für derartige Starter sind z.B. Diole, wie Ethylenglykol, Aminoalkohole, wie Ethanolamin, oder Diamine, wie Piperazin, etc. Weiterhin können auch Hydroxylgruppen terminierte Polyether, z.B. Polypropylenoxide, Polytetrahydrofurane etc. als Startermoleküle verwendet werden. Die Polymerisation erfolgt in einem Temperaturbereich von 50 bis 300°C, bevorzugt von 120 bis 200°C, vorzugsweise in Gegenwart eines Katalysators, der basisch, sauer oder neutral oder ein Umesterungskatalysator sein kann.

Im Vergleich zu strukturell ähnlich aufgebauten Polyadipaten zeichnen sich Poly-ε-Caprolactone durch ihre erhöhte Hydrolysestabilität beim Einsatz als Weichsegmentbausteine in Polyurethansystemen aus, weswegen sie trotz erhöhter Kosten eingesetzt werden. Allerdings neigen sie zu vermehrter Kristallisation, so dass sie aufgrund dieser Verhärtungstendenz für viele Anwendungen nicht in Betracht gezogen werden können. Dieses Problem kann gemäß DE-A 1 946 873 dadurch behoben werden, dass man Poly-s-Caprolactone durch Einbau von Dicarbonsäuren und Diolen modifiziert. Aus derartig modifizierten Poly-ε-Caprolactonen hergestellte Polyurethanelastomere zeichnen sich ebenfalls durch erhöhte Hydrolysebeständigkeit bei verminderter bzw. nicht mehr vorhandener Kristallisations- und Verhärtungstendenz aus.

Zur Herstellung der modifizierten Poly-ε-Caprolactone werden die Aufbaukomponenten ε-Caprolacton, Dicarbonsäure und Diol gemischt und auf Temperaturen von vorzugsweise 100 bis 250°C erhitzt, wobei sich unter Abspaltung von Wasser je nach Einsatzverhältnissen Polyesterpolyole mit OH-Zahlen von 40 bis etwa 80 mg KOH/g bilden. Der Anteil an ε-Caprolacton kann von 10 bis 75 Gew.-% reichen, vorzugsweise jedoch von 25 bis etwa 70 Gew.-%. Als Dicarbonsäuren können die für Polyesterpolyole typischen Vertreter, z.B. Bernsteinsäure, Adipinsäure, etc. und als Diole Ethylenglykol, Butylenglykol etc. verwendet werden. Darüber hinaus auch in geringen Mengen höherfunktionelle Vertreter, wie Glycerin, 1,1,1-Trimethylolpropan etc..

Aus DE-A 2 115 072 sind die Verwendung bestimmter Katalysatoren (Antimonhalogenide) und spezielle Reaktionsführungen (Vorreaktion von ε-Caprolacton mit Polyolen und anschließende Umsetzung mit Polycarbonsäure) zur Herstellung der modifizierten Poly-ε-Caprolactone (Mischpolyesterpolyole) bekannt.

Diese Mischpolyesterpolyole werden in besonders hochwertigen Anwendungen, beispielsweise Floppy Disks (US-A 5,955,169) zur Mikroverkapselung wasserlöslicher, wasserdispergierbarer oder wasserempfindlicher Materialien (US-A 5,911,923) bei der Herstellung von Brillengläsern (US-A 5,880,171) Knochenersatzmaterial zur Stabilisierung von verletzten Nasenknochen (US-A 5,810,749), Herstellung von sphärischen Polyurethan-Partikeln (EP-A 0 509 494) etc. eingesetzt.

Weiterhin sind Caprolactoneinheiten enthaltende Polyetherester, z.B. auf Basis Polyoxyethylenblock-Polyoxypropylen-block-Polyoxyethylen, in medizinischen Anwendungen interessante Bausteine, da sie hydrophile Strukturlemente (PEO) enthalten, die dem System spezielle und steuerbare Eigenschaften bezüglich des Gelierungsverhaltens in Wasser, bezüglich der Abbaukinetik und bezüglich der Temperaturabhängigkeit des rheologischen Verhaltens verleihen (D. Cohn et al., Biomaterials 27 (2006) 1718).

Im Falle der Verwendung von Polyestern, z.B. in Polyurethan-(PUR)-anwendungen ist neben den Eigenschaften des PUR-Endproduktes auch das Herstellverfahren desselben Gegenstand von Verbesserungsbemühungen. Beispielsweise ist es von entscheidender Wichtigkeit, dass die Verarbeitungseigenschaften einer reagierenden Polyurethanschmelze gut handhabbar sein müssen. Dies gilt insbesondere für deren Viskosität, die einen gewissen Grenzwert möglichst nicht überschreiten sollte. Zu hochviskose Schmelzen können beispielsweise nur noch schlecht in Formen gegossen werden bzw. lassen sich nicht mehr in einer gegebenen Zeit mit dem Kettenverlängerer vollständig verrühren, so dass derartig hergestellte Produkte wertlos sind. Bekanntermaßen weisen Polyetherpolyole basierte Systeme niedrigere Viskositäten auf, so dass dieses Problem in manchen Fällen durch Ersatz des Polyesterpolyols durch ein Polyetherpolyol gelöst werden kann, wenn es die Anwendung erlaubt.

Weiterhin ist bekannt, dass die Viskosität von Polyolen generell mit steigender Molmasse ansteigt (siehe z.B. P.C. Hiemenz: Polymer Chemistry, The Basic Concepts, Marcel Dekker, Inc. New York. S. 104, 1984). Deswegen tritt das o.g. Verarbeitungsproblem insbesondere dann auf, wenn a) Polyesterpolyole, b) Polyesterpolyole mit höheren Molmassen und c) Polyesterpolyole mit höheren Molmassen und höheren Funktionalitäten zum Einsatz gelangen, wobei sich das Verarbeitungsproblem von a) über b) nach c) jeweils verschärft. Dennoch kann es erforderlich sein, auch die besonders kritischen Fälle b) und c) mit den bislang damit verbundenen Nachteilen zu realisieren, z.B. wenn es gilt vergleichsweise weiche Gießelastomere mit vergleichsweise hohen Erweichungstemperaturen bereitzustellen. Hier muss dann z.B. ein vergleichsweise hoher Anteil eines Kettenverlängerers mit einem Prepolymer mit vergleichsweise vielen NCO-Gruppen zur Reaktion gebracht werden, um einen hohen Hartsegmentoligomerisationsgrad und damit verbunden eine hohe Erweichungstemperatur realisieren zu können. Zur Verminderung der Härte ist es in derart gelagerten Fällen erforderlich, ein möglichst langkettiges Polyol und je nach Anforderung der Anwendung ein möglichst langkettiges Polyesterpolyol zu verwenden. Genau diese Kombination ist jedoch aufgrund des oben Gesagten besonders problematisch.

Eine Lösung dieses Problems besteht darin, polyolgestartete Poly-s-caprolactone zu verwenden. Poly-s-caprolactone zeichnen sich gegenüber in der Molmasse und in der Funktionalität vergleichbaren Polyadipaten dadurch aus, dass sie eine deutlich verringerte Viskosität aufweisen. Sie lösen somit aus technologischer Sicht das beschriebene Problem durchaus zufriedenstellend.

Poly-ε-caprolactone sind jedoch leider gegenüber den in der Molmasse und Funktionalität vergleichbaren Adipaten deutlich teurer und daher wirtschaftlich in vielen Anwendungen nicht einsetzbar.

Aufgabe der vorliegenden Erfindung war es daher, Polyesterpolyole zur Verfügung zu stellen, welche im Vergleich zu analogen herkömmlichen Polyesterpolyolen deutlich niedrigere Viskositäten aufweisen und darüber hinaus technisch einfach und wirtschaftlich günstig hergestellt werden können, sowie ein Verfahren zu ihrer Herstellung.

Herkömmliche Polyesterpolyole in diesem Zusammenhang sind solche, die ganz oder überwiegend aus Polycarbonsäuren oder deren Derivaten mit mindestens 2 und höchstens 6, vorzugsweise 4 Carboxylgruppen und insgesamt 4 bis 12 Kohlenstoffatomen aufgebaut sind, also z.B. Adipin-, Glutar-, Bernstein-, Phthalsäure, usw. und die bei Temperaturen von ≥ 180°C unter Abspaltung von Wasser oder eines niedermolekularen, im Normalfall monofunktionellen Alkohols hergestellt werden.

Überraschenderweise wurde gefunden, dass Polyesterpolyole aus bestimmten Ausgangsverbindungen, die in einer bestimmten Reihenfolge unter definierten Bedingungen miteinander umgesetzt werden, die gestellte Aufgabe lösen.

Zur Herstellung dieser Polyesterpolyole wurde ein zweistufiges Verfahren durchgeführt, in dessen erster Stufe ein Polyesterpolyol mit einer Säurezahl nahe Null (als Zwischenprodukt) bei typischen Versterungsbedingungen aus Carbonsäuren und Polyolen hergestellt wurde und in dessen zweiter Stufe dieses Polyesterpolyol mit cyclischen Estermonomeren umgesetzt wurde.

Gegenstand der Erfindung ist ein Verfahren zur Herstellung von Polyesterpolyolen mit Funktionalitäten von 1,95 bis 3,25 und OH-Zahlen von 90 bis 33 mg KOH/g, wobei
a) organische Polycarbonsäuren mit 4 bis 12 Kohlenstoffatomen und 2 bis 4 Carboxylgruppen, deren Derivate oder Mischungen daraus
   mit
b) organischen Polyolen mit Funktionalitäten von 2 bis 4 und zahlenmittleren Molekulargewichten von 62 bis 400 g/mol
   bei Temperaturen von 150 bis 250°C unter Vakuum zu Hydroxylgruppen-terminierten Polyesterpolyolen Z mit einer Hydroxylzahl von 100 bis 40 mg KOH/g und einer Funktionalität von 1,95 bis 3,25 umgesetzt werden und danach
c) bei Anfangstemperaturen unter 220°C cyclische Estermonomere, insbesondere ε-Caprolacton in einem Massenverhältnis von Polyesterpolyol Z zu cyclischem Estermonomer von 10:1 1 bis 1:1 zugesetzt werden, wobei die Temperatur nach höchstens 60 Minuten bei kleiner oder gleich 175°C liegt,
wobei die OH-Zahl des Polyesterpolyols Z um mindestens 5 mg KOH/g vermindert wird und das Verhältnis von Molen des cyclischen Estermonomers zu den Hydroxylgruppen des Polyesterpolyols Z 0,75:1 bis 10:1 beträgt.

Die erfindungsgemäßen Polyesterpolyole weisen im Vergleich zu konventionell, d.h. in einer einstufigen Reaktion hergestellten Polyesterpolyolen gleicher Bruttozusammensetzung signifikant niedrigere Viskositätswerte auf.

Die Viskosität des in der ersten Stufe erhaltenen Polyesterpolyols wird bei der weiteren Umsetzung mit cyclischen Estermonomeren in der zweiten Stufe nicht wesentlich erhöht.

Selbstverständlich können die zwei Reaktionsstufen im selben oder in verschiedenen Reaktionskesseln durchgeführt werden.

Polyesterpolyole Z aus der ersten Stufe umfassen alle dem Fachmann bekannten Polyesterpolyole, die zur Herstellung von PUR-Elastomeren Verwendung finden können. Sie werden hergestellt, indem man organische Polycarbonsäuren bzw. Polycarbonsäurederivate oder deren Gemische so umsetzt, dass Polyesterpolyole Z erhalten werden, die überwiegend Hydroxylgruppen terminiert sind und eine Säurezahl von annähernd Null aufweisen.

Organische Polycarbonsäuren sind vorzugsweise bifunktionelle, aliphatische oder aromatische oder araliphatische Carbonsäuren mit 4 bis 12 C-Atomen, besonders bevorzugt aus der Gruppe 2,2-Dimethylmalonsäure, Bernsteinsäure, Glutarsäure, Adipinsäure, Pimelinsäure, Sebacinsäure, Suberinsäure, Phthalsäure, Terephthalsäure und Isophthalsäure.

Selbstverständlich können auch Gemische aus organischen Polycarbonsäuren und/oder deren Derivate (z.B. Ester) mit niedermolekularen monofunktionellen Alkoholen und/oder deren Polyester verwendet werden.

Selbstverständlich können auch Anhydride von Dicarbonsäuren eingesetzt werden. Beispiele sind: Phthalsäure- und Bernsteinsäureanhydrid, etc.

Als organische Polyole werden vorzugsweise bifunktionelle, aliphatische und/oder araliphatische Polyole mit 2 bis 20 C-Atomen verwendet, besonders bevorzugt Verbindungen aus der Gruppe bestehend aus Ethylen-, Propylen-, Butylen-, Pentylen, Hexylen-, Octylen, Decylen-, Dodecylengylkol und Hydrochinon-bis-(2-hydroxyethyl)ether. Polyole aus den homologen Reihen der Oligoethylen-, Oligopropylen- und Oligobutylenoxide sind ebenfalls bevorzugt.

Es können auch Polyole und/oder Polycarbonsäuren mit verwendet werden, deren Funktionalität größer als 2 ist, wie z.B. 1,1,1-Trimethylolpropan, Glycerin, Pyromellithsäure, etc.

Die Herstellung der Polyesterpolyole Z der ersten Stufe erfolgt in an sich bekannter Weise dadurch, dass man die Reaktanden mischt und unter Rühren langsam auf Temperaturen von mindestens 150°C, vorzugsweise mindestens 180°C erhitzt und das abgespaltene Wasser, bzw. ggf. den abgespaltenen niedermolekularen monofunktionellen Alkohol abdestilliert. Vorzugsweise wird kein Katalysator eingesetzt. Die Reaktion wird dadurch vervollständigt, dass man langsam den Druck absenkt, zuletzt auf Werte von unter 50 mbar, vorzugsweise unter 25 mbar. Hierbei wird bevorzugt ein Veresterungskatalysator in Mengen von 1 bis 100 ppm zugesetzt. Es kann jedoch auch ohne Katalysator gearbeitet werden, wodurch sich die Reaktionszeit verlängert.

Die Reaktion ist bei einer Säurezahl von unter 10, bevorzugt unter 5, besonders bevorzugt unter 3 mg KOH/g beendet.

Selbstverständlich kann die Reaktion zur Herstellung des Zwischenproduktes (Polyesterpolyol Z) auch unter Einsatz eines Schleppmittels, wie z.B. Dioxan, Toluol etc. durchgeführt werden, wobei das Schleppmittel nach Ende der Umsetzung destillativ abgetrennt wird.

Die zweite Stufe des Verfahrens beinhaltet die Umsetzung des Polyesterpolyols Z mit cyclischen Estermonomeren, bevorzugt ε-Caprolacton.

Besonders bevorzugt ist eine Verfahrensweise, bei der das Polyesterpolyol Z bei einer Anfangstemperatur von unterhalb 220°C, vorzugsweise 180 - 210°C mit dem zyklischen Estermonomeren für höchstens 60 Minuten, vorzugsweise höchstens 45 Minuten, verrührt wird und die Umsetzung nach dieser Anfangsperiode dann bei Temperaturen unterhalb 175°C, vorzugsweise 170 - 140°C, vervollständigt wird.

Zur schnellen groben Bestimmung des Umsatzes an , zyklischem Estermonomeren kann der Brechungsindex des Reaktionsgemisches herangezogen werden. Seine Konstanz deutet an, dass die Umsetzung im Wesentlichen vollständig ist. Zur Feinanalyse sollten jedoch die bekannten Methoden, wie z.B. die Hochdruckflüssigkeitschromatographie (HPLC), Gelpermeationschromatographie (GPC) u.ä. verwendet werden.

In der Praxis brauchbare Reaktionsprodukte weisen Gehalte an freiem zyklischen Estermonomeren von höchstens 3 Gew.-%, bevorzugt höchstens 1,5 Gew.%, besonders bevorzugt höchstens 1 Gew.-% auf.

Zur Umsetzung des Polyesterpolyols Z mit zyklischem Estermonomeren können selbstverständlich auch Katalysatoren verwendet werden. Als Katalysatoren kommen alle dem Fachmann bekannten Umesterungs- und Veresterungskatalysatoren in Betracht. Beispielhaft seien genannt: Zinn-IIhalogenide, Organozinnverbindungen, Titan- und Zirkoniumalkoxylate, Zinn- und Wismut-Carboxylate, usw.

Bevorzugt weisen die erfindungsgemäß hergestellten Polyesterpolyole, OH-Zahlen auf, die gegenüber den OH-Zahlen des Polyesterpolys Z um mindestens 5 mg KOH/g geringer sind. Das Massenverhältnis von Polyesterpolyol Z zu cyclischem Estermonomer beträgt 10 : 1 bis 1 : 1. Das Verhältnis von Molen des cyclischen Estermonomers zu den Molen der Hydroxylgruppen des Polyesterpolyols Z beträgt mindestens 0,75 zu 1 bis 10:1.

Die erfindungsgemäß hergestellten Polyesterpolyole weisen gegenüber solchen Polyesterpolyolen, die die gleiche Bruttozusammensetzung und die gleiche Funktionalität aufweisen, signifikant verminderte Viskositätswerte auf.

Die erfindungsgemäß hergestellten Polyesterpolyole können als Polyolkomponente zur Herstellung von Isocyanat-Prepolymeren und von Polyurethanen eingesetzt oder mit eingesetzt werden.

Die Isocyanat-terminierten Prepolymere sind Reaktionsprodukte eines oder mehrerer organischen Di- oder Polyisocyanate mit mindestens einem erfindungsgemäß hergestellten Polyesterpolyol. Diese Prepolymere werden durch Reaktion eines oder mehrerer organischen Di- oder Polyisocyanate mit wenigstens einem erfindungsgemäß hergestellten Polyesterpolyolhergestellt. Die NCO-Prepolymere werden in bekannter Weise mit Isocyanatüberschuss hergestellt.

Beispielsweise können geschäumte und nicht geschäumte Polyurethane mit Dichten von 0,4 bis 1,3 g/ml unter Verwendung der erfindungsgemäß hergestellten Polyesterpolyole hergestellt werden. Dies kann z.B. nach dem bekannten Gießverfahren erfolgen.

Bei der Herstellung der Isocyanat-Prepolymeren und der Polyurethane werden vorzugsweise Polyisocyanate aus der Gruppe Diphenylmethandiisocyanat, Toluylendiisocyanat, Naphthylendiisocyanat, Hexamethylendiisocyanat, Cyclohexylendüsocyanat, 1-Isocyanato-3-isocyanatomethyl-3,3,5-trimethylcyclohexan (Isophorondiisocyanat; IPDI), 3,3'-Dimethyl-4,4'-biphenyldiisocyanat (TODI), Meta-tetramethylxyloldiisocyanat (TMXDI), Phenylendiisocyanat, Tetramethylphenylendiisocyanat und 4,4'-Dicyclohexylmethandiisocyanat eingesetzt.

Bei der Herstellung der Polyurethane werden die aus dem Stand der Technik bekannten Kettenverlängerer und/oder Vernetzer eingesetzt.

Die Erfindung soll anhand der nachfolgenden Beispiele näher erläutert werden.

### Beipiele:

### Beispiel 1 (Vergleich)

| | |
|---|---|
| 48,3 Gew.-Tle. | Adipinsäure |
| 26,1 Gew.-Tle. | 1,4-Butandiol |
| 8,5 Gew.-Tle. | 1,6-Hexandiol |
| 0,8 Gew.-Tle. | 1,1,1-Trimethylolpropan |
| 16,3 Gew.-Tle. | ε-Caprolacton |

wurden in einem Kolben eingewogen und bei Normaldruck langsam unter Rühren auf 200°C erwärmt. Man destillierte ca. 11 Tle. Wasser ab. Nach Ende der Wasserabspaltung wurden 20 ppm Zinndichlorid-dihydrat zugegeben und im Verlauf von ca. 4 Std. langsam Vakuum (15 mbar) angelegt. Die Reaktion wurde unter diesen Bedingungen innerhalb von weiteren ca. 15 Std. vervollständigt. Die Säurezahl, OH-Zahl und Viskosität wurden bestimmt.

| | |
|---|---|
| Säurezahl: | 0,5 mg KOH/g |
| OH-Zahl: | 47,4 mg KOH/g |
| Viskosität: | 1320 mPas/75°C |
| Funktionalität: | 2,16 |

### Beispiel 2 (erfindungsgemäß)

| | |
|---|---|
| 48,3 Gew.-Tle. | Adipinsäure |
| 26,1 Gew.-Tle. | Butandiol |
| 8,5 Gew.-Tle. | Hexandiol |
| 0,8 Gew.-Tle. | 1,1,1-Trimethylolpropan |

wurden in einem Kolben eingewogen und bei Normaldruck langsam unter Rühren auf 200°C erwärmt. Man destillierte ca. 11 Tle. Wasser ab. Nach Ende der Wasserabspaltung wurden 20 ppm Zinndichlorid-dihydrat zugegeben und im Verlauf von ca. 4 Std. langsam Vakuum (15 mbar) angelegt. Die Reaktion wurde unter diesen Bedingungen innerhalb von weiteren ca. 15 Std. vervollständigt. Die Säurezahl und OH-Zahl wurde bestimmt.

| | |
|---|---|
| Säurezahl: | 0,2 mg KOH/g |
| OH-Zahl: | 60,5 mg KOH/g |
| Funktionalität: | 2,16 |

Zu dem auf 150°C abgekühlten Produkt gab man

| | |
|---|---|
| 16,3 | Gew.-Tle. ε-Caprolacton |

und rührte bei 150°C ca. 20 Std. bis zur Konstanz des Brechungsindex (1,46376 bei 50°C). Die Säurezahl, OH-Zahl, die Viskosität und der Anteil an freiem Caprolacton wurden bestimmt.

| | |
|---|---|
| Säurezahl: | 0,9 mg KOH/g |
| OH-Zahl: | 45,0 mg KOH/g |
| Viskosität: | 750 mPas/75°C |
| Anteil freies Caprolacton: | 0,86 Gew-% |

### Beispiel 3 (Vergleich)

Beispiel 2 wurde wiederholt mit dem einzigen Unterschied, dass das ε-Caprolacton zum auf 200°C erhitzten Produkt gegeben wurde.

### Beispiel 4 (Vergleich)

Beispiel 2 wurde wiederholt mit dem Unterschied, dass in der 1. Stufe ε-Caprolacton mit 1,6-Hexandiol umgesetzt wurde und zu diesem Produkt bei 200°C 1,4-Butandiol, 1,1,1-Trimethylolpropan und Adipinsäure gegeben wurde.

Der Vergleich der Beispiele 1 und 2 zeigt, dass das erfindungsgemäß hergestellte Polyesterpolyol (Bsp. 2) bei identischer Bruttozusammensetzung eine signifikant geringere Viskosität bei ähnlicher OH-Zahl aufweist.

**Tabelle 1: Rezepturen und Eigenschaften (bei konstanter Gesamtzusammensetzung)**

| **Beispiel** | | **1(V)** | **2** | **3(V)** | **4(V)** |
|---|---|---|---|---|---|
| Adipinsäure | [Gew.-%] | 48,3 | 48,3 | 48,3 | 48,3 |
| 1,4-Butandiol | [Gew.-%] | 26,1 | 26,1 | 26,1 | 26,1 |
| 1,6-Hexandiol | [Gew.-%] | 8,5 | 8,5 | 8,5 | 8,5 |
| 1,1,1-Trimethylol-propan | [Gew.-%] | 0,8 | 0,8 | 0,8 | 0,8 |
| ε-Caprolacton | [Gew.-%] | 16,3 | 16,3 | 16,3 | 16,3 |
| | | | | | |
| Verfahren | Stufen | 1 Stufe | 2 Stufen | 2 Stufen | 2 Stufen 1. Stufe: Caprolacton und 1,6-Hexandiol, 2. Stufe: Veresterung mit Butandiol, TMP und Adipinsäure |
| Temperatur 2. Stufe | [°C] | - - | 150 | 200 | 200 |
| Verweilzeit 2. Stufe | [Stunden] | - - | 20 | 5 | 20 |
| OH-Zahl | [mg KOH/g] | 47,4 | 45 | 45,7 | 44,4 |
| Säurezahl | [mg KOH/g] | 0,5 | 0,9 | 0,8 | 0,3 |
| Funktionalität | | 2,16 | 2,16 | 2,18 | 2,16 |
| Viskosität, 75°C | [mPas] | 1320 | 750 | 1510 | 1610 |
| Anteil freies Caprolacton | [Gew.-%] | n.b. | 0,86 | n.b. | n.b. |

| | | | | | |
|---|---|---|---|---|---|
| (V): Vergleichsversuch | | | | | |

Die Ergebnisse aus der Tabelle 1 zeigen, dass bei der gleichen Zusammensetzung, d.h. identischen Mengenverhältnissen der Polyole und Polycarbonsäuren sowie des ε-Caprolactons und ähnlichen Molekulargewichten bzw. Hydroxylzahlen der Produkte (44,4 bis 47,4), nur dann Polyesterpolyole mit niedrigen Viskositäten (≤ 1000 mPas (75°C) erhalten werden, wenn erfindungsgemäß gearbeitet wird.

### Beispiele 5a bis 5c

Die Herstellung des Zwischenproduktes erfolgte wie in Beispiel 2 beschrieben. Das Polyesterpolyol wurde aus 1,4-Butandiol, 1,6-Hexandiol und 1,1,1-Trimethylolpropan sowie Adipinsäure hergestellt (Mengenverhältnisse siehe Tabelle 2).

Danach wurde ε-Caprolacton in unterschiedlichen Mengen (siehe Tabelle 3) über einen Tropftrichter im Verlauf von 30 Minuten zugegeben. Hierbei betrug die Temperatur des vorgelegten Polyesterpolyols anfangs 200°C. Im Verlauf der Zugabe des ε-Caprolactons wurde die Temperatur auf 150°C gesenkt. Es wurden 10 ppm Zinndichlorid-dihydrat zugegeben, für weitere 10 Stunden bei dieser Temperatur nachgerührt und die OH-Zahl, Viskosität sowie der Anteil an freiem Caprolacton bestimmt.

**Tabelle 2: Rezeptur und Eigenschaften des Zwischenproduktes**

| | | |
|---|---|---|
| Adipinsäure | Gew.-Teile | 57,7 |
| 1,4-Butandiol | Gew.-Teile | 31,2 |
| 1,6-Hexandiol | Gew.-Teile | 10,2 |
| 1,1,1-Trimethylolpropan | Gew.-Teile | 0,956 |
| OH-Zahl | [mg KOH/g] | 60,9 |
| Viskosität (75°C) | [mPas] | 790 |
| Funktionalität | | 2,2 |

**Tabelle 3: Rezeptur und Eigenschaften des Endproduktes**

| **Beispiel** | | **5a** | **5b** | **5c** |
|---|---|---|---|---|
| Zwischenprodukt | Gew.-Teile | 90,9 | 83,3 | 76,9 |
| ε-Caprolacton | Gew.-Teile | 9,1 | 16;7 | 23,1 |
| Massenverhältnis | | 9,98 : 1 | 4,99: 1 | 3,33 : 1 |
| Zwischenprodukt Z/ ε-Caprolacton | | | | |
| Molverhältnis | | | | |
| ε-Caprolacton / OH-Gruppen des Zwischenprodukts | | 0,79: 1 | 1,59: 1 | 2,38: 1 |
| Produkteigenschaft | | | | |
| OH-Zahl | [mg KOH/g] | 54,5 | 49,9 | 45,2 |
| Viskosität (75°C) | [mPas] | 810 | 830 | 780 |
| Funktionalität | | 2,2 | 2,2 | 2,2 |
| Freies Caprolacton | Gew.-Teile | 0,09 | 0,14 | 0,95 |

Die Ergebnisse aus Tabelle 3 zeigen, dass trotz Erhöhung der Molmasse (Verringerung der OH-Zahl) die Viskosität unter 1 000 Pas (75°C) liegt.

### Beispiel 6

Herstellung eines Polyurethans mit den erfindungsgemäßen Polyesterpolyolen aus 5a, 5b und 5c (erfindungsgemäß) sowie aus dem Vergleichspolyol 1 (V):

Polyole aus Beispiel 1 (V) und 5b stimmen bezüglich ihres Anteils an ε-Caprolacton überein (jeweils ca. 16 Gew.%). Dagegen enthält Polyol aus Beispiel 5a mit ca. 9% weniger und Polyol aus Beispiel 5c mit 23% mehr ε-Caprolacton als das Polyol aus Vergleichsbeispiel 1(V). Bezüglich der OH-Zahl liegt das Polyol aus 1(V) mit 47,4 mg KOH/g zwischen Polyol aus 5b (49,9 mg KOH/g) und aus 5c (45,2 mg KOH/g). Die in Tabelle 4 aufgeführten Rezepturen wurden so zusammengestellt, dass in allen 4 Beispielen PU-Elastomere erhalten wurden, die hinsichtlich ihrer ShoreA-Härte praktisch identisch sind und Werte von 94 bis 95 aufweisen.

Man erwärmte 124 Tle. des Polyols aus 5a auf 130°C und gab unter Rühren 27 Tle. festes 1,5-Naphthalindiisocyanat zu. Man legte nach 3 Minuten Vakuum an, um das Reaktionsgemisch zu entgasen. Die reagierende Schmelze erwärmte sich infolge der NCO-OH-Reaktion nach 14 Minuten auf 124°C. Man bestimmte den NCO-Wert zu 4,35 Gew.-% NCO und die Viskosität zu 1630 mPas (120°C). Zu diesem Prepolymer wurden 5,8 Gew.-Tle. 1,4-Butandiol intensiv 30 Sekunden lang so eingerührt, dass keine Luftblasen in der Mischung auftraten. Man goß die reagierende Mischung in auf 110°C vorgewärmte Formen, entformte nach ca. 15 Minuten, temperte die Formkörper bei 110°C in einem Umluftheizschrank für 24 Stunden nach und bestimmte nach etwa 1 Monat Lagerung bei Raumtemperatur die mechanischen Eigenschaften.

**Tabelle 4: Polyurethan-Elastomere**

| **Rezeptur:** | **Beispiel:** | | 6 | 7 | 8 | 9 (V) |
|---|---|---|---|---|---|---|
| | Polyol aus 5a | [Gew.-Tle.] | 124 | | | |
| | Polyol aus 5b | [Gew.-Tle.] | | 112 | | |
| | Polyol aus 5c | [Gew.-Tle.] | | | 103 | |
| | Polyol aus 1(V) | [Gew.-Tle.] | | | | 120 |
| | NDI | [Gew.-Tle.] | 27 | 27 | 27 | 27 |
| | 1,4-Butandiol | [Gew.-Tle.] | 5,8 | 5,8 | 5,8 | 5,8 |
| | NCO-Wert, Prep, theoret. | [Gew,-% NCO] | 4,37 | 4,75 | 5,08 | 4,42 |
| | NCO-Wert, Prep, exp. | [Gew,% NCO] | 4,35 | 4,72 | 4,93 | 4,39 |
| | Viskosität, Prepolymer | [mPas] bei 120°C | 1630 | 2030 | 2100 | 2270 |

| **Verarbeitung:** | | | | | | |
|---|---|---|---|---|---|---|
| | Polyoltemperatur | [°C] | 130 | 130 | 130 | 130 |
| | Vemetzertemperatur | [°C] | 23 | 23 | 23 | 23 |
| | Gießzeit | [s] | 95 | 65 | 50 | 50 |
| | Formtemperatur | [°C] | 110 | 110 | 110 | 110 |
| | Entformung nach | [min] | 15 | 15 | 15 | 15 |

| **Mechanische Eigenschaften:** | | | | | | |
|---|---|---|---|---|---|---|
| DIN 53505 | Shore A-Härte | [Shore A] | 94 | 95 | 94 | 94 |
| DIN 53505 | Shore D-Härte | [Shore D] | 36 | 38 | 40 | 37 |
| DIN 53504 | Spannung 50% | [MPa] | 7,7 | 8,3 | 8,3 | 7 |
| DIN 53504 | Spannung 100% | [MPa] | 9,4 | 10,0 | 10,3 | 8,9 |
| DIN 53504 | Spannung 300% | [MPa] | 14 | 15 | 16,1 | 13,9 |
| DIN 53504 | Reißspannung | [MPa] | 43,7 | 35,1 | 39,5 | 35,6 |
| DIN 53504 | Reißdehnung | [%] | 610 | 530 | 520 | 600 |
| | Graves | [kN/m] | 44 | n.b. | n.b. | 43 |
| | Stoßelastizitaet | [%] | 74 | 73 | 71 | 71 |
| DIN 53517 | DVR 22°C | [%] | 15,8 | 13,8 | 13,9 | 13,2 |
| DIN 53517 | DVR 70°C | [%] | 24,7 | 21,5 | 20,1 | 21,9 |
| DIN 53517 | DVR 100°C | [%] | 35,7 | 37,6 | 37,6 | n.b. |

Die in Tabelle 4 aufgeführten mechanischen Eigenschaften der Gießelastomere zeigen kaum Unterschiede. Dies gilt sowohl für die erfindungsgemäßen Beispiele 6, 7 und 8 untereinander als auch bei deren Vergleich mit dem Vergleichsbeispiel 9 (V). Günstiger, z.T. sogar deutlich günstiger ist das Verarbeitungsverhalten bei den erfindungsgemäßen Beispielen, insbesondere in Bezug auf die Viskosität der NCO-Prepolymeren. Hier wird in Abhängigkeit von der gewählten Variante eine deutliche Absenkung erreicht, was die Verarbeitung vereinfacht.

Die Beispiele zeigen , dass die für die erfindungsgemäßen Polyole gefundenen günstigen Werte für die Viskosität sich auch in daraus hergestellten NCO-Prepolymeren wiederfinden und die gesamte Prozesskette vorteilhaft ausgestaltet werden kann.

## Patentansprüche

1. Verfahren zur Herstellung von Polyesterpolyolen mit Funktionalitäten von 1,95 bis 3,25 und OH-Zahlen von 90 bis 33 mg KOH/g, wobei
a) organische Polycarbonsäuren mit 4 bis 12 Kohlenstoffatomen und 2 bis 4 Carboxylgruppen, deren Derivate oder Mischungen daraus
mit
b) organischen Polyolen mit Funktionalitäten von 2 bis 4 und zahlenmittleren Molekulargewichten von 62 bis 400 g/mol
bei Temperaturen von 150 bis 250°C unter Vakuum zu Hydroxylgruppenterminierten Polyesterpolyolen Z mit einer Hydroxylzahl von 100 bis 40 mg KOH/g und einer Funktionalität von 1,95 bis 3,25 umgesetzt werden und danach
c) bei Anfangstemperaturen unter 220°C cyclische Estermonomere in einem Massenverhältnis von Polyesterpolyol Z zu cyclischem Estermonomer von 10:1 bis 1:1 zugesetzt werden, wobei die Temperatur nach höchstens 60 Minuten bei kleiner oder gleich 175°C liegt,
wobei die OH-Zahl des Polyesterpolyols Z um mindestens 5 mg KOH/g vermindert wird und das Verhältnis von Molen des cyclischen Estermonomers zu den Hydroxylgruppen des Polyesterpolyols Z 0,75:1 bis 10:1 beträgt.

## Claims

1. A process for the production of polyester polyols having functionalities of 1.95 to 3.25 and OH numbers of 90 to 33 mg KOH/g, wherein
a) organic polycarboxylic acids having 4 to 12 carbon atoms and 2 to 4 carboxyl groups, the derivatives thereof or mixtures thereof
are reacted with
b) organic polyols having functionalities of 2 to 4 and number-average molecular weights of 62 to 400 g/mol,
at temperatures of 150 to 250°C under vacuum to form hydroxyl group-terminated polyester polyols Z having a hydroxyl number of 100 to 40 mg KOH/g and a functionality of 1.95 to 3.25, and then
c) at starting temperatures below 220°C, cyclic ester monomers are added in a ratio by weight of polyester polyol Z to cyclic ester monomer of 10:1 to 1:1, the temperature being less than or equal to 175°C after no more than 60 minutes,
the OH number of the polyester polyol Z being reduced by at least 5 mg KOH/g and the ratio of moles of the cyclic ester monomer to the hydroxyl groups of the polyester polyol Z being 0.75:1 to 10:1.

## Revendications

1. Procédé pour la préparation de polyesterpolyols avec des fonctionnalités de 1,95 à 3,25 et des indices OH de 90 à 33 mg de KOH/g, dans lequel :
a) des acides polycarboxyliques organiques avec de 4 à 12 atomes de carbone et de 2 à 4 groupes carboxyle, des dérivés ou des mélanges de ceux-ci réagissent avec
b) des polyols organiques avec des fonctionnalités de 2 à 4 et des masses moléculaires moyennes en nombre de 62 à 400 g/mol
à des températures de 150 à 250°C sous vide pour produire des polyesterpolyols Z terminés par des groupes hydroxyles avec un indice hydroxyle de 100 à 40 mg de KOH/g et une fonctionnalité de 1,95 à 3,25 et.
c) des monomères d'esters cycliques sont ensuite ajoutés à des températures de départ inférieures à 220°C dans un rapport de masse du polyesterpolyol Z au monomère d'ester cyclique de 10:1 à 1:1, la température étant après au plus 60 min inférieure ou égale à 175°C,
l'indice OH du polyesterpolyol Z étant abaissé d'au moins 5 mg de KOH/g et le rapport des moles du monomère d'ester cyclique aux groupes hydroxyle du polyesterpolyol Z étant de 0,75:1 à 10:1.
